# EUROPEAN PATENT SPECIFICATION

(11) **EP 2 479 958 B1**
(45) Date of publication and mention of the grant of the patent: **25.10.2017**
(21) Application number: 11151033.5
(22) Date of filing: 14.01.2011
(51) Int. Cl.: H04L 29/08

(54) **Registration device for handling information on the status of a location, system and method for managing the status and method for handling the status**
Registriervorrichtung zur Handhabung von Information zum Status eines Standorts, System und Verfahren zur Verwaltung des Status und Verfahren zur Handhabung des Status
Dispositif d'enregistrement pour la gestion d'informations de l'état d'un emplacement, système et procédé pour la gestion de l'état et procédé de gestion de l'état

(43) Date of publication of application: 25.07.2012
(73) Proprietor: Vodafone GmbH, 40549 Düsseldorf (DE)
(72) Inventor: Barry, Aguibou Mountaga, 6217 GW Maastricht (NL)
(74) Representative: Müller & Schubert

(56) References cited:
- WO-A1-01/63563
- WO-A1-2008/046443
- WO-A1-2009/024882
- US-A1- 2007 008 181
- Anonymous: "Bump", Wikipedia, the free encyclopedia , 31 March 2010 (2010-03-31), pages 1-2, XP002659936, Retrieved from the Internet: URL:http://en.wikipedia.org/wiki/Bump_%28a pplication%29 [retrieved on 2011-09-21]

## Description

The present invention relates to a registration device for handling information on the status of a location, a system for managing the status of a location, a method for handling the status of a location as well as to a method for managing the status of a location.

WO 2008/046443 A1 discloses a system and method for virtual sports competitions and sports centric internet communities. In this system data is automatically acquired by sports practitioners when practicing their sport. The location where the performance has been performed is stored. The system mainly comprises a computer-based system such as an internet server, enabling to maintain user association with specific devices, automatic acquisition and handling of data acquired by sports devices and the automatic management of virtual competitions. The handling of the status of a location is, however, not described in this document.

WO 2009/024882 A1 discloses a method and apparatus for sending data relating to a target to a mobile device. In this method a mobile device may be moved in order to trigger sending of data to the mobile device. The data sent is data relating to a target towards which the mobile device was moved. Also this document does not describe the handling of the status of a location.

Furthermore the Wikipedia article "Bump" (application) describes an application which allows two smartphone users to bump their phones together to exchange contact information and other objects between phones. Before bumping the phones, the users have to confirm which object they want to send to the other user. Once the users have bumped their phones data is sent automatically through a separate internet server to the other user. The server is able to detect when any two phones bump each other. Also this article does not describe the handling of the status of a location.

Finally, WO 01/63563 A1 describes a vehicle parking system. In this system a parking meter which has a transmitter receiver which can communicate with a central station is used. Commands are input into the user's telephone and information is downloaded to the parking meter. The user can also communicate to the central station from his phone via the parking meter rather then directly to the central station. One disadvantage of this system is that it requires the user to establish a telephone communication to either the central station or the parking meter.

Managing the occupancy of rooms which are used by several people, for example meeting rooms in company buildings is difficult as it has to be monitored in real-time. In addition, the availability of the rooms has to be such that they are being used in the most efficient way by all potential users.

It is therefore an object of the present invention to provide suitable devices, systems and methods to allow for a reliable yet simple way of handling information on and managing the status of a location.

According to a first aspect, the problem is solved by a registration device for handling information on the status of a location, which is related to the registration device, wherein the registration device comprises at least one communication unit for communicating with at least one external entity, said communication unit comprising a first communication member for communicating with at least one external entity being of a remote server for managing communication between the registration device and at least one mobile handset, said communication unit comprising a second communication member for communicating with at least one external entity being of a management unit, which is a management unit for managing the status of the location, for at least transmitting the received identification data of the at least one mobile handset to at least one management unit and for receiving information on the status of the location at the registration device from the management unit, said communication unit comprising a third communication member for communicating with at least one external entity being of a mobile handset, for receiving at least identification data from the at least one mobile handset, said registration device further comprising at least one activation member for activating the first communication member for establishing a communication connection to the at least one remote server.

A registration device according to the present invention is a device providing the necessary input and output, receiving and transmission as well as processing and generating means for handling information on the status of a location. The registration device is preferably positioned at the geographical position of the location or close to this geographical position. A location according to the present invention is a geographically confined area such as a room or a building. The status information on such a location, which will hereinafter also be referred to as location status information, indicates the occupancy/availability of the location and may for example be "reserved" or "booked", "available" and/or "occupied". The handling of this information at the registration device preferably includes one or more of the following actions: generating, receipt, transmittal, processing and/or output of signals/data/information. A registration device is considered to be related to the location according to the present invention, if it is positioned at or close to the location or has positional information of the location stored or has access to the positional information of the location. A communication unit according to the present invention is a unit capable of or designed to receive, transmit, generate and/or process information/data and / or signals. The communication of the registration device with an external entity may comprise the transmission and receipt of information/data and / or signals. An external entity according to the present invention is any unit which is not physically connected to the registration device and which is positioned outside of the body of the registration device. The external entities comprise servers, such as network servers as well as mobile devices such as mobile handsets such as mobile phones.

According to the present invention, the communication unit comprises several communication members. The communication members are functional members or units. This means that more than one communication members may be realized by one single hardware or software unit.

The first communication member is a member or unit for communicating with at least one external entity, which is a remote server for managing communication between the registration device and at least one mobile handset. This first communication member may comprise a mobile communication interface and in particular may comprise a transceiver in the form of an antenna and/or a processing unit for processing signals and/or information. The communication is preferably carried out via a mobile communication network and the registration device should at least support USSD transmission. The data transmission to the remote server may also be done via SMS or IP.

The second communication member is a member or unit for communicating with at least one external entity, which is a management unit for managing the status of a location. The management unit may be a central management unit, managing the status of several locations. The management unit is preferably a server, in particular a network server. The second communication member may comprise a mobile communication interface and in particular may comprise a transceiver in the form of an antenna and/or a processing unit for processing signals and/or information.

The third communication member is a member or unit for communicating with at least one external entity, which is a mobile handset. The third communication member may comprise an interface for near field communication, such as communication via Bluetooth protocol or other short range communication protocols. In addition or alternatively the third communication member may comprise a mobile communication interface and in particular may comprise a transceiver in the form of an antenna and/or a processing unit for processing signals and/or information.

A mobile handset according to the present invention is preferably a mobile phone.

The registration device further comprises at least one activation member for activating the first communication member for establishing a communication connection to the at least one remote server. The activation member includes a sensor or switch. The activation member may also include a microphone to detect noise generated from a striking action. The activation member is connected to the communication unit such that the first communication member may be activated to establish a communication connection to a remote server upon detection of a predetermined state of the sensor or switch. In addition, the activation member preferably triggers the generation and transmission of an event to the remote server. An event according to the present invention is a set of information which includes an indicia of the position of the registration device. The remote server to which the event is transmitted is a server, preferably a network server for managing communication between the registration device and at least one mobile handset.

By providing three functional communication members at the registration device, the registration device can communicate information to and receive information from the respective individual entities for handling the information on the status of the location. In particular, the registration device may obtain knowledge of the presence and identity of a mobile handset and this information may be used for determining or updating the information of the status of location. For example the presence of a mobile handset may be used to indicate that a participant of a meeting has checked in to a scheduled meeting. This processing of information according to the present invention does not have to be performed at the registration device itself as a communication member for communicating with a management unit is provided at the communication unit of the registration device. Hence, the lay-out and technical requirements of the registration device are minimized. In addition, information obtained via different channels, for example via the internet may be included in the processing of information at the management unit. Therefore, it will be possible to determine whether the presence of a specific mobile handset at the location was scheduled of not. If the presence of the mobile handset and thus the presence of the user of the mobile handset was not previously indicated, the management unit may consider the presence of the mobile handset to be an indication of the user wanting to reserve or book the location.

As the registration device includes a communication member for communicating with a remote server for managing the communication between the registration device and the mobile handset, the initiation of the communication between those devices, in particular a pairing of the mobile handset and the registration device, does not require a complex initiation process. The communication connection may rather be initiated by a mere striking of the registration device with the mobile handset. Thereby, the activation member in the registration device may be activated and the communication connection between the registration device and the mobile handset may be initiated by the remote server, which may also be referred to a strike server. At the remote server the movement of the mobile device together with a indication of the position of the mobile handset will be compared to the movement at and the position of the registration device. Thereby, it can be determined that the mobile handset and thus the respective user is at the geographical position of the location in question and the communication between the mobile handset and the registration device can be initiated. The communication between these two devices may then be a short range wireless communication such as a Bluetooth communication. Via the communication connection between these two devices, identification data of the mobile handset which is also indicative of the user of the mobile handset, may be transmitted.

With the inventive registration device it will therefore be possible for a user to check in to a meeting at a location, in particular a meeting room, if the meeting room had been reserved and the user had been listed as a participant. In addition, a user may book or reserve an available meeting room via the registration device. Both actions can be performed by merely striking or bumping the mobile handset, which will also be referred to as a mobile device, against the registration device.

According to one embodiment, the registration device further comprises a user interface for providing status information on the location to a user. The user interface may preferably be a graphical user interface, which may comprise at least one light emitting diode (LED). By displaying or otherwise outputting the location status information to the user at the registration device, the user will be aware of the status and may decide on his further actions. If for example, the meeting room where the user currently is, is available and the user is informed on this status by means of the registration device, he can decide to book the room, be striking or bumping his mobile handset against the registration device. If the status of the meeting room is "reserved" or "booked", the user who is supposed to attend this meeting may check into the meeting also by merely striking or bumping the mobile handset against the registration device. By using a graphical user interface (GUI) represented by at least one LED, the lay-out of the registration device is simplified. In addition, the power consumption of such a GUI is low and the registration device may thus be operated with a small energy source such as a battery. The location status information may be displayed via such a GUI by displaying different colours and/or illuminating the LEDs at different frequencies. The following table shows an example on how the different status of a meeting room may be displayed by means of two LEDs.

| | **Human present** | | **Human NOT present** | |
|---|---|---|---|---|
| | LED 1 | LED 2 | LED 1 | LED 2 |
| **Meeting room NOT reserved** | GnB or RnB | Green | OFF | Green |
| **Meeting room reserved and checked in** | OFF | Red | OFF | Red |
| **Meeting room reserved but NOT checked in** | GnB or RnB | BnB | OFF | BnB |
| **Meeting room NOT reserved but checked in (temporary occupancy**) | OFF | Red | n.a. | n.a. |

Wherein: GnB: Green and Blinking
BnB: Blue and Blinking
RnB: Red and Blinking

According to a preferred embodiment, the activation member of the registration device comprises at least one sensor for detecting movement and/or acceleration of at least part of the registration device, wherein the sensor preferably is an accelerometer or part of a switch. Moving of part of the registration device or actuating the switch will be effected by the striking or bumping action against the registration device.

According to one embodiment, the registration device comprises at least one identification module, which is preferably a subscriber identification module (SIM). By including such a module, the communication of the registration device to the remote server and the management unit can be carried out via a mobile communications network. In that embodiment, the registration device does not require wired connections to a network such as the Internet. If the communication between the registration device and the remote server for managing the communication connection between the registration device and the mobile handset is carried out over a mobile communications network, the geographical position of the registration device can be determined by the cell identification of the cell where the registration device is positioned. It is, however, also possible according to the present invention to provide the indicia of the geographical position of the registration and thereby of the location to be managed by extracting this information from a storage at the registration device. The indicia of the location is necessary at the remote server to determine whether the registration device is at the same location as a mobile handset in order to determine to which mobile handset a communication connection should be established by the registration device. The geographical position of the mobile handset can also be determined by the cell identification of the cell where the mobile handset is positioned.

According to a preferred embodiment, the registration device comprises at least one detection member for detecting the presence of a human being. The detection member may be a sensor such as an infrared sensor. By providing such a detection member, the management of the status of the location may be performed in a more reliable fashion. In particular, the fact whether a person is actually present at a meeting room may be included in the determination of the status of the location. This information or a respective sensor signal may therefore also be transmitted to the management unit from the registration device. If the registration device is positioned outside of the meeting room, the presence of humans may be detected using a RF signal detector of GSM/3G signals to detect mobile phone presence.

In addition, to providing supplementary information for the management of the location, the detection member may also be used to reduce power consumption of the registration device. According to one embodiment, the registration device therefore comprises a power management unit, which is preferably connected to the detection unit for detecting the presence of a human being and/or is connected to a power supply. In this embodiment, the registration device may be turned off, that means disconnected from the power supply, or may be in an idle mode, if it is currently not being used. Once the presence of a human in the vicinity of the registration device is detected, the registration device may be switched on, for example may be connected to the power supply, or may be put into a ready mode. In this mode, the registration device may be actuated by striking a mobile handset against it.

The registration device may also be turned on or set to the ready mode manually. In this embodiment, the registration device comprises a switch or button which can be operated by a user.

The power supply of the registration device may be a rechargeable battery. In addition or alternatively, the registration device may comprise a USB connector for connection to a power source.

According to a preferred embodiment, the registration device comprises at least two body parts which are movably connected to one another. By using a registration device consisting of two body parts, it is possible to affix the registration device to a wall or other stationary fixture at the location, and yet to actuate the registration device by striking or bumping a mobile handset against it. By the striking action, the second body part will be moved relative to the stationary body part which is affixed to the wall. In a preferred embodiment, the shape of one of the body parts, preferably the movable body part is a dome shape. This shape is advantageous as the surface for striking a mobile handset is large and at least part of the components of the registration device, such as the communication unit, may be included in the movable body part. The two body parts are preferably detachably connected to each other. By being able to remove one of the body parts access to components within or underneath that body part will become accessible and may be replaced. For example, a battery may be replaced that way.

According to a further aspect, the present invention relates to a system for managing the status of a location comprising at least one registration device, at least one mobile handset, at least one remote server for managing the communication between at least one of the registration devices and at least one of the mobile handsets and at least one management unit for managing the status of the location. The registration device of the inventive system is preferably a registration device according to the present invention, which has been described above. The remote server and the management unit may be represented by one single network server. Preferably, the two units are, however, located at or represented by separate servers. By including a management unit and a remote server into the system, the management of data and information relevant for managing the status of the location can be provided without necessitating extensive processing power at the registration device. The mobile handset which is included in the system, can be used for actuating the registration device and at the same time servers for identification of the user towards the management unit. Thereby, it can be detected which participant of a meeting is currently checking in or which user desires to book the meeting room.

According to another aspect, the present invention relates to a method for handling the status of a location in a system comprising at least one registration device, wherein at least the steps of:
detecting an movement of at least part of the registration device,
generating an event based on the movement,
transmitting the event to at least one remote server for managing the communication between the registration device and at least one mobile handset,
receiving an instruction signal from the remote server in response to the event, establishing a communication connection to at least one mobile handset based on the instruction signal,
receiving identification data from the at least one mobile handset via the established communication connection, and
transmitting the received identification data to at least one management unit, for managing the status of the location,
are performed at the registration device.

The detection of movement of at least part of the registration device is preferably performed by a sensor or detector at the registration device. The movement is effected by a striking action against the registration device. The striking action is performed by striking a mobile handset against the registration device. The part of the registration device, which is moved, may be a switch or a body part of a two-part body of the registration device. Based on the detected movement, an event is generated, which is representative of the striking action. In particular, the event includes an indication of the movement or acceleration and an indicia of the geographical location of the registration device. This event is transmitted to at least one remote server for managing the communication between the registration device and at least one mobile handset. Subsequently, an instruction signal is received from the remote server in response to the event. The instruction signal indicates to the registration device that a communication connection is to be established with the mobile handset. Thereafter, a communication connection to the at least one mobile handset is established based on the instruction signal. The mobile handset is the handset which originally was used for the striking action. Via the thus established communication connection identification data from the at least one mobile handset is received. The thus received identification data is then transmitted to at least one management unit. All these steps are performed at the registration device.

According to a preferred embodiment, the method further comprises the step of receiving information on the status of the location at the registration device from the management unit. This location status information is generated based on the information which is stored at the management unit and the identification data transmitted from the registration device to the management unit. In addition, information such as current time as well as the geographical position of the registration device is considered for generating the location status information.

According to a preferred embodiment, the method for handling the status of a location comprises the step of storing and/or outputting this location status information at the registration device. The location status information will be received from the management unit. Upon receipt, this information may immediately be output. Subsequently, the status information may be stored at the registration device. The information may, however, alternatively be stored before it is output. The thus stored information will thus be available to indicate the status of the location at a later point in time. The output of the location status information is preferably performed via a graphical user interface. By outputting the status at the registration device, the user, who initiated the striking action by striking his mobile handset against the registration device, will be informed of the current status of the location. In addition, a user approaching the registration device at a later state will also become aware of the status. Thereby, a user may for example be informed that the meeting room he is currently at, is not booked, but that another user has checked in.

In a preferred embodiment, the registration device will also receive status information of the location from the management unit, even if no striking action has occurred. In this case the location status information is transmitted to the registration device, if the status of the location is changed at the management unit.

The management unit is preferably accessible for users. The access may be performed via the Internet or another communication network such as a mobile communication network. The user may log in to the service provided by the management unit and may for example place a booking for a specific meeting room. In this booking or reservation, the time of the meeting, its duration and the expected participants may be indicated. The indication of the participants preferably includes information such as an ID-number or name of the user. The thus generated location status information may be transmitted to the registration device periodically, upon change of the status information or at set points of time, for example at the time of the beginning of a meeting or shortly before the meeting. The current location status information may also be transmitted to the registration device, when the registration device is turned on or when the mode of the registration device is changed from an idle state to a ready state. At this point a user is close to the registration device and should be informed of the current status.

According to another embodiment, the method for handling the status of a location further comprises the steps of:
detecting the presence of a human at the location and
changing the state or mode of the registration device to a ready state if presence of a human is detected.

In this embodiment, no manual actuation of the registration device will be necessary but the power consumption of the registration device can still be kept to a minimum. As the registration device will be ready, the user will be able perform a striking action with his mobile handset and can thus either check in to a meeting or book the meeting room.

According to a further embodiment, for managing the status of a location in a system comprising at least one registration device and at least one management unit, the steps of:
receiving identification data of a mobile handset from the at least one registration device,
comparing the received identification data with information stored at the management unit with regards to the location related to the registration device,
generating information relating to the status of the location based on the comparison result, and
transmitting the information relating to the status of the location to the at least one registration device
are performed at the management unit.

The identification data of a mobile handset which is received from the at least one registration device at the management unit will have been transmitted to the registration device via a direct connection between the registration device and the mobile handset, which was initiated by a striking action. The identification data of the mobile handset may be an ID number of the mobile handset itself or an ID of the user of the mobile handset. The ID of the user of the handset may for example be an ID number issued by the management unit, when the booking of a meeting room with the indication of the participants is performed. The thus received identification data will be compared to information stored at the management unit. The information stored at the management unit is the information, which is originally provided by a user either directly to the management unit or via a registration device. The information mainly includes booking times and durations, identifications of participants as well as an indication of the location, for example the geographical position of the meeting room or some other identification of the meeting room, such as the ID of the registration device related to the meeting room. By comparing identification data of a mobile handset or a user to the stored information, it will be possible to determine whether the user currently present at the location, wishes to sign into a meeting or wishes to book the meeting room. The comparison will be possible as additional data, in particular an indicia of the location to which the registration device relates will be transmitted to and received at the management unit from the registration device when the identification data of the mobile handset will be transmitted.

Based on the result of this comparison, information relating to the status of the location will be generated at the management unit. The generation of the information relating to the location may be a mere update of a stored status of the location. In addition or alternatively, the information relating to the status of the location may be a prompt asking for further information. For example a prompt to indication the desired duration of a meeting may be generated, if the comparison result reveals, that the meeting room in question had not been booked. This comparison result will occur, if identification data of a mobile handset is transmitted to the management unit for a location, for which no information, such as a booking or participants has been stored.

The generated information relating to the status of the location, that means the location status information or a prompt will be transmitted to the registration device, where it can be output.

The information stored at the management unit, to which information received at the management unit will be compared, is preferably stored sorted by location. As the information which is received at the management unit for comparison preferably comprises an indicia of the location to which the registration device is related, it will be possible to easily identify the current status of the location and to chance the status where appropriate. According to one embodiment, the method comprises the step of updating the information stored at the management unit based on the comparison result.

The methods according to the present invention are preferably performed with a registration device according to the present invention and/or with a system according to the present invention.

Features and advantages which have been described with respect to the inventive registration device also apply to the system of the invention and the inventive methods, respectively, and vice versa.

The invention will now be described again with reference to the enclosed figures, wherein:
Figure 1: shows a schematic view of one embodiment of the inventive system,
Figure 2: shows a schematic block diagram of one embodiment of the inventive registration device,
Figure 3: shows a schematic view of one embodiment of the inventive registration device, and
Figure 4: shows a schematic view of another embodiment of the inventive registration device.

The same reference numbers are used for the same units or components in the different figures and the functioning and advantages of these units or components will therefore only be explained once.

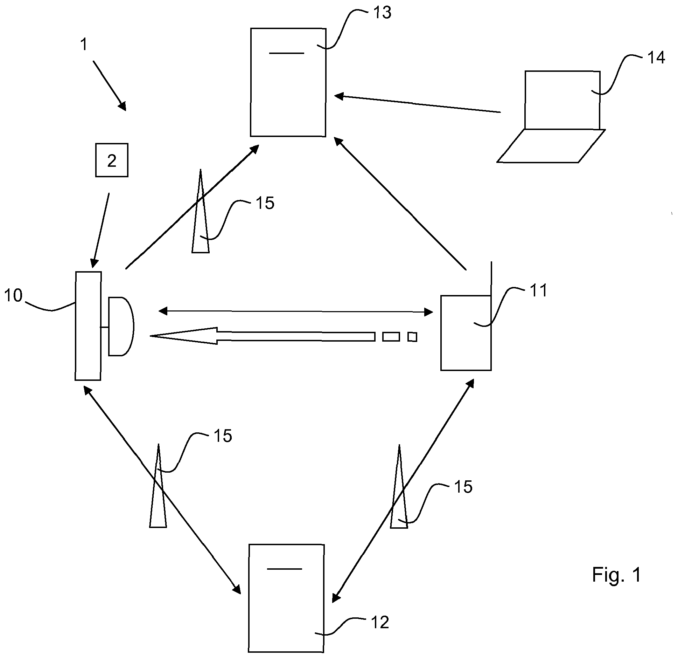

The embodiment of the system 1 depicted in Figure 1 comprises a registration device 10, a mobile handset 11, a remote server 12, a management unit 13. In addition, a personal computer 14 is shown in Figure 1. The registration device 10 is positioned at a location, which is preferably a meeting room (not shown).

One example of the inventive method will now be described with respect to the system 1 depicted in Figure 1.

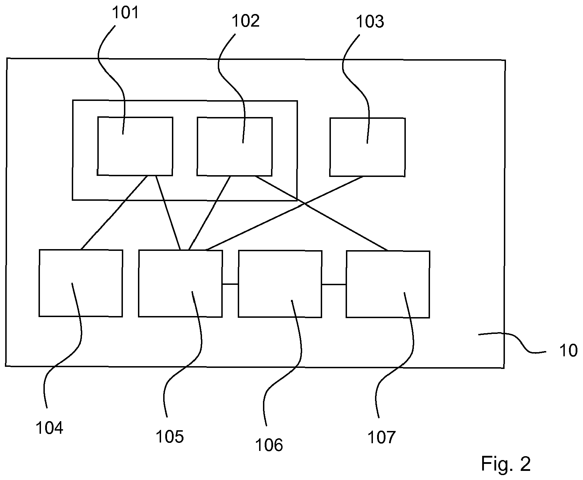

The registration device 10 is in an idle mode or state. Once a user 2 approaches the registration device 10 the registration device 10 will change into a ready state or mode. This mode may be indicated to the user 2, for example by a GUI 105 (see Figure 2 to 4). If the user 2 strikes his mobile handset 11 against the registration device 10, the dome shaped part of the body of the registration device 10 will move relative to the box shaped part of the body of the registration device 10. This movement will be detected at the registration device 10 and a respective event will be generated. The event will be transmitted to the remote server 12. At the same time, also the mobile handset 11 will generate an event on the striking action and will also transmit this event to the remote server 12. The remote server 12 will compare the events and will identify that both devices are at the same geographical position and have obviously been stroke against each other. The transmission of the events to the remote server 12 is carried out via a mobile communication network, depicted by the base stations 15 in Figure 1. By using the cell ID from where the respective events have been sent or by extracting other positional information from the received event, the remote server 12 can perform the mentioned identification that both devices are at the same geographical position. Thereupon the remote server 12 will generate and transmit a signal to both, the registration device 10 and the mobile handset 11. This signal will include an instruction to establish a communication connection to the respective other device. This establishing of a communication connection is preferably a pairing of the two devices. Via the established communication connection, identification data of the mobile handset 11 or of the user 2 is transmitted to the registration device 10.

The registration device 10 will transmit this identification data to the management unit 13. The identification data may be transmitted together with an indicia of the geographical position of the registration device 10. Alternatively, the position of the registration device 10 may be determined by using cell ID information of the communication network which is used for the transmission to the management unit 13. The management unit 13 will compare or otherwise process this identification data and other received information. The processing and comparison is performed with information stored at the management unit 13. The stored information may have been provided to the management unit for example by using the personal computer 14 and accessing the service provided on the management unit 13. The management unit 13 will then transmit information relating to the status of the location, where the registration device 10 is positioned to the registration device 10. This status may be output, in particular displayed, at the registration device 10.

As shown in Figure 2, the registration device 10 may comprise the following components. A communication unit 100, which comprises a first communication member 101, a second communication member 102 and a third communication member 103, an activation member 104, a user interface 105, a power management unit 106 and a presence detection member 107. In the depicted embodiment, the first and second communication member 101, 102 are realised as one single unit. The activation member 104 is connected to the first communication member 101. The GUI 105 may be connected to all three, the first, the second and the third communication member 101, 102 and 103. The presence detection member 107 is connected to the power management unit 106. Thereby the registration device 10 can be activated if the presence of a human being is detected. The power management system 106 is also connected to the GUI 105 so that the state or mode of the registration device 10 can be displayed to the user 2.

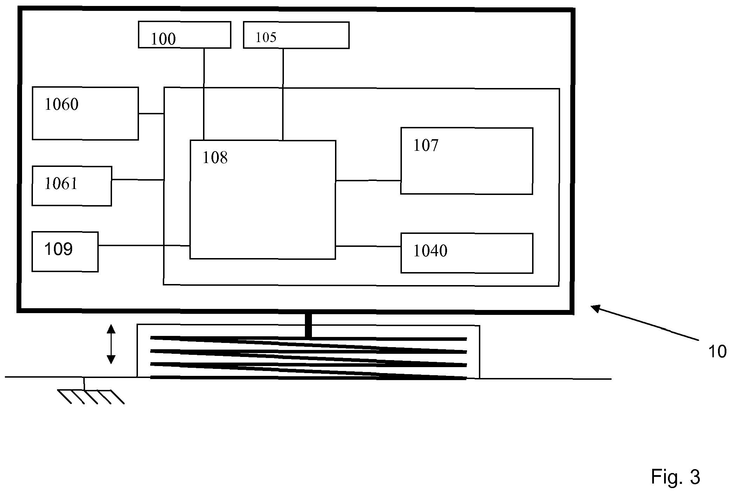

In the embodiment shown in Figure 3, the registration device 10 consists of two body parts, wherein a spring is provided in the lower body part. The upper body part includes the remaining components of the registration device 10. In the depicted embodiment, the communication unit 100 comprises an antenna as well as a processing unit 108 which may be a GSM/GPRS Baseband, for example a wireless module. In particular, a module with a processor can be used. Such a module may for example be a SIM900D provided by SIMCOM Wireless Solutions Co, Ltd. Thereby, also Quad-Band support can be offered by the communication unit. Also an identification module 109, in particular an SIM is included in the registration device 10 of Figure 3. Furthermore a USB connector 1060 and battery 1061 are included. Finally, a human presence sensor 107, for example in the form of an IR sensor and an accelerometer 1040 are provided. The registration device 10 also includes a GUI 105 for example in the form of one or more LEDs.

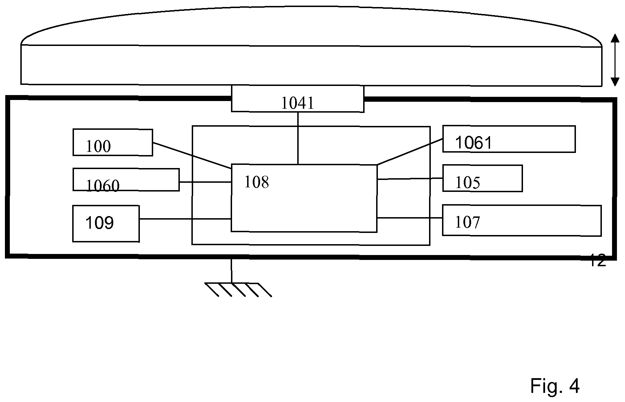

Figure 4 shows a different embodiment of the registration device 10. In this embodiment, all components are included in the lower body part and switch 1041 is positioned at the connection between the lower and the upper body part. The components of the registration device 10 are identical to the ones described with respect to the embodiment of Figure 3. Only, the accelerometer 1040 of Figure 3 is not present in this embodiment. The movement of the upper body part relative to the lower body part will be detected in the embodiment of Figure 4 by the switch 1041.

The present invention provides means for informing a user who may want to use a meeting room on the current availability of the meeting room and provides an easy way for a user to check in to a meeting. For this purpose the registration device, which may also be referred to as a dome button, is provided at the meeting room, for example in the room or at the entrance thereof. If the dome button is pushed, the acceleration or movement thereof will be detected and the information on the status of the meeting room may be obtained from a management unit, which may be a server which is different to the remote server managing striking actions on the registration device. The status of the meeting room may include both, information on the current reservation status of the meeting room as well as information on the presence of humans in the meeting room.

The registration device or dome button may have the following physical features:
a diameter base of 80 to 120mm
a dome height of 30 to 50mm
a part that can be fixed to a wall or a table, and a mobile part that can absorb the strike action
the mobile part of the dome button may be moving in two axes maximum. It may be rotation only on axis X and/or translation only on axis Y.
able to withstand temperature range from -20°C to +85°C.
it may comprise a 3-axis accelerometer fixed in a way that it can register the movement initiated by the strike action.
the processing unit, in particular the GSM baseband may be fixed to either the fixed part or the mobile part of the dome button.
the registration device may be powered and recharged by an external power source (power plug, solar pane...).
the dome button may be able to recharge itself, for example through absorption of energy of the strike action, through vibration from strike action or with solar pane.
the dome button may vibrate to provide a retroactive response to a user strike action. on battery capacity below 20%, the dome button may send a warning a device management server.
the dome button may have one LED informing the user on whether it can be struck the dome button may have one LED informing the user on whether the meeting room is available or not.

- 1: System

- 10: Registration device

- 100: Communication unit
- 101: first communication member
- 102: second communication member
- 103: third communication member

- 104: Activation member
- 1040: Accelerometer
- 1041: Switch
- 105: User Interface
- 106: Power Management unit
- 1060: USB Connector
- 1061: Battery

- 107: presence detection member
- 108: Processing unit
- 109: Identification module

- 11: Mobile handset
- 12: Remote server
- 13: Management unit
- 14: Personal computer
- 15: Base station

- 2: User

## Claims

1. Registration device for handling information on the status of a location, which is related to the registration device, wherein the registration device (10) comprises
at least one communication unit (100) for communicating with at least one external entity (12, 13),
said communication unit (100) comprising a first communication member (101) for communicating with at least one external entity being a remote server (12) for managing communication between the registration device (10) and at least one mobile handset (11),
said communication unit (100) comprising a third communication member (103) for communicating with at least one external entity being a mobile handset (11) for receiving at least identification data from the at least one mobile handset (11),
said communication unit (100) comprising a second communication member (102) for communicating with at least one external entity being a management unit (13), which is a management unit (13) for managing the status of the location, for at least transmitting the received identification data of the at least one mobile handset (11) to at least one management unit and for receiving information on the status of the location at the registration device (10) from the management unit (13),
said registration device (10) further comprising at least one activation member (104) for activating the first communication member (101) for establishing a communication connection to the at least one remote server (12).

2. Registration device according to claim 1, **characterized in that** it further comprises a user interface (105) for providing status information on the location to a user (2), wherein the user interface (105) is preferably a graphical user interface, which may optionally comprise at least one light emitting diode (LED).

3. Registration device according to anyone of claims 1 or 2, **characterized in that** the activation member (104) comprises at least one sensor (1040, 1041) for detecting movement and/or acceleration of at least part of the registration device (100), wherein the sensor preferably is an accelerometer (1040) or part of a switch (1041).

4. Registration device according to anyone of claims 1 to 3, **characterized in that** it comprises at least one identification module (109), which is preferably a subscriber identification module (SIM).

5. Registration device according to anyone of claims 1 to 4, **characterized in that** it comprises at least one detection member (107) for detecting the presence of a human being.

6. Registration device according to anyone of claims 1 to 5, **characterized in that** it comprises a power management unit (106), which is preferably connected to a detection member (107) for detecting the presence of a human being and/or connected to a power supply.

7. Registration device according to anyone of claims 1 to 6, **characterized in that** the registration device (10) comprises at least two body parts which are movably connected to one another, wherein one of the body parts preferably has a dome shape.

8. System for managing the status of a location comprising at least one registration device (10) according to anyone of the claims 1 to 7, at least one mobile handset (11), at least one remote server (12) for managing the communication between at least one of the registration devices (10) and at least one of the mobile handsets (11) and at least one management unit (13) for managing the status of the location.

9. Method for handling the status of a location in a system comprising at least one registration device (10), wherein at least the steps of:
detecting an movement of at least part of the registration device (10),
generating an event based on the movement,
transmitting the event to at least one remote server (12) for managing the communication between the registration device (10) and at least one mobile handset (11),
receiving an instruction signal from the remote server (12) in response to the event,
establishing a communication connection to at least one mobile handset (11) based on the instruction signal,
receiving identification data from the at least one mobile handset (11) via the established communication connection, and
transmitting the received identification data to at least one management unit (13) for managing the status of the location, and
receiving information on the status of the location from the management unit, are performed at the registration device (10).

10. Method according to claim 9, **characterized in that** the method further comprises the step of storing and/or outputting this location status information at the registration device (10).

11. Method according to anyone of claims 9 or 10, **characterized in that** it further comprises the steps of:
detecting the presence of a human at the location and
changing the state of the registration device (10) to a ready state if presence of a human is detected.

12. Method according to anyone of claims 9 to 11, **characterized in that** for managing the status of a location in a system comprising at least one registration device (10) and at least one management unit (13) the steps of:
receiving information, including identification data of a mobile handset (11) from the at least one registration device (10),
comparing the received identification data with information stored at the management unit (13) with regards to the location related to the registration device (10),
generating information relating to the status of the location based on the comparison result, and
transmitting the information relating to the status of the location to the at least one registration device (10)
are performed at the management unit (13).

13. Method according to claim 12, **characterized in that** the information stored at the management unit (13) is stored sorted by location and **in that** the received information preferably comprises an indicia of the location to which the registration device (10) is related.

14. Method according to anyone of claims 12 or 13, **characterized in that** the information stored at the management unit (13) is updated based on the comparison result.

15. Method according to anyone of claims 9 to 14, **characterized in that** it is carried out with a system (1) according to claim 8.

## Patentansprüche

1. Registrierungsvorrichtung zur Handhabung von Informationen über den Status eines Ortes, der mit der Registrierungsvorrichtung verbunden ist, wobei die Registrierungsvorrichtung (10) umfasst:
zumindest eine Kommunikationseinheit (100) zum Kommunizieren mit zumindest einer externen Einheit (12, 13),
wobei die Kommunikationseinheit (100) ein erstes Kommunikationsmittel (101) zum Kommunizieren mit zumindest einer externen Einheit, die ein Remoteserver (12) zum Verwalten der Kommunikation zwischen der Registrierungsvorrichtung (10) und zumindest einem mobilen Handapparat (11) ist, umfasst,
wobei die Kommunikationseinheit (100) ein drittes Kommunikationsmittel (103) zum Kommunizieren mit zumindest einer externen Einheit, die ein mobiler Handapparat (11) ist, zum Erhalt von zumindest Identifikationsdaten von dem zumindest einen mobile Handgerät (11) umfasst,
wobei die Kommunikationseinheit (100) zumindest ein zweites Kommunikationsmittel (102) zum Kommunizieren mit zumindest einer externen Einheit, die eine Verwaltungseinheit (13) ist, die eine Verwaltungseinheit (13) zur Verwaltung des Status des Ortes ist, umfasst, um zumindest die erhaltenen Identifikationsdaten des zumindest einen mobilen Handapparates (11) zu zumindest einer Verwaltungseinheit zu übermitteln und um Informationen über den Status des Ortes an der Registrierungsvorrichtung (10) von der Verwaltungseinheit (13) zu erhalten,
wobei die Registrierungsvorrichtung (10) weiterhin zumindest ein Aktivierungsmittel (104) zum Aktivieren des ersten Kommunikationsmittels (101) umfasst, um eine Kommunikationsverbindung zu dem zumindest einen Remoteserver (12) herzustellen.

2. Registrierungsvorrichtung gemäß Anspruch 1, **dadurch gekennzeichnet, dass** diese weiterhin eine Benutzerschnittstelle (105) zum Zurverfügungstellen von Statusinformationen über den Ort an einen Benutzer (2) umfasst, wobei die Benutzerschnittstelle (105) vorzugsweise eine graphische Benutzerschnittstelle ist, die optional zumindest eine lichtemittierende Diode (LED) umfassen kann.

3. Registrierungsvorrichtung gemäß einem der Ansprüche 1 oder 2, **dadurch gekennzeichnet, dass** das Aktivierungsmittel (104) zumindest einen Sensor (1040, 1041) zum Detektieren von Bewegung und/oder Beschleunigung von zumindest einem Teil der Registrierungsvorrichtung (100) umfasst, wobei der Sensor vorzugsweise ein Beschleunigungssensor (1040) oder Teil eines Schalters (1041) ist.

4. Registrierungsvorrichtung gemäß einem der Ansprüche 1 bis 3, **dadurch gekennzeichnet, dass** diese zumindest ein Identifikationsmodul (109), das vorzugsweise ein Teilnehmer-Identifikationsmodul (SIM) ist, umfasst.

5. Registrierungsvorrichtung gemäß einem der Ansprüche 1 bis 4, **dadurch gekennzeichnet, dass** diese zumindest ein Detektionsmittel (107) zum Detektieren der Anwesenheit einer Person umfasst.

6. Registrierungsvorrichtung gemäß einem der Ansprüche 1 bis 5, **dadurch gekennzeichnet, dass** diese eine Energieverwaltungseinheit (106) umfasst, die vorzugsweise mit einem Detektionsmittel (107) zum Detektieren der Anwesenheit einer Person und /oder mit einer Stromversorgung verbunden ist.

7. Registrierungsvorrichtung gemäß einem der Ansprüche 1 bis 6, **dadurch gekennzeichnet, dass** die Registrierungsvorrichtung (10) zumindest zwei Körperteile umfasst, die miteinander beweglich verbunden sind, wobei einer der Körperteile vorzugsweise eine Kuppel-Form aufweist.

8. System zur Verwaltung des Status eines Ortes umfassend zumindest eine Registrierungsvorrichtung (10) gemäß einem der Ansprüche 1 bis 7, zumindest einen mobilen Handapparat (11), zumindest einen Remoteserver (12) zur Verwaltung der Kommunikation zwischen zumindest einer der Registrierungsvorrichtungen (10) und zumindest einem der mobilen Handapparate (11) und zumindest eine Verwaltungseinheit (13) zur Verwaltung des Status des Ortes.

9. Verfahren zur Handhabung des Status eines Ortes in einem System, das zumindest eine Registrierungsvorrichtung (10) umfasst, wobei zumindest die Schritte
des Detektierens einer Bewegung von zumindest einem Teil der Registrierungsvorrichtung (10),
des Erzeugens eines Ereignisses basierend auf der Bewegung,
der Übermittlung des Ereignisses an zumindest einen Remoteserver (12) zur Verwaltung der Kommunikation zwischen der Registrierungsvorrichtung (10) und zumindest einem mobilen Handapparat (11),
des Empfangens eines Anweisungssignals von dem Remoteserver (12) in Antwort auf das Ereignis,
des Herstellens einer Kommunikationsverbindung zu zumindest einem mobilen Handapparat (11) basierend auf dem Anweisungssignal,
des Empfangens von Identifikationsdaten von dem zumindest einen mobilen Handapparat (11) über die hergestellte Kommunikationsverbindung, und des Übermittelns der empfangenen Identifikationsdaten an zumindest eine Verwaltungseinheit (13) zum Verwalten des Status des Ortes, und
des Empfangens von Informationen über den Status des Ortes von der Verwaltungseinheit,
von der Registrierungsvorrichtung (10) ausgeführt werden.

10. Verfahren nach Anspruch 9, **dadurch gekennzeichnet, dass** das Verfahren weiterhin den Schritt des Speicherns und/oder der Ausgabe dieser Ortsstatusinformation an der Registrierungsvorrichtung (10) umfasst.

11. Verfahren nach einem der Ansprüche 9 oder 10, **dadurch gekennzeichnet, dass** dieses weiterhin die Schritte des Detektierens der Anwesenheit einer Person an dem Ort und Ändern des Zustandes der Registrierungsvorrichtung (10) in einen Bereit-Zustand umfasst, wenn die Anwesenheit einer Person detektiert wird.

12. Verfahren nach einem der Ansprüche 9 bis 11, **dadurch gekennzeichnet, dass** zur Verwaltung des Status eines Ortes in einem System, das zumindest eine Registrierungsvorrichtung (10) und zumindest eine Verwaltungseinheit (13) umfasst, die Schritte
des Empfangens von Informationen, einschließlich von Identifikationsdaten eines mobile Handapparates (11) von der mindestens einen Registrierungsvorrichtung (10),
des Vergleiches der empfangenen Identifikationsdaten mit Informationen, die an der Verwaltungseinheit (13) gespeichert sind, bezüglich des Ortes, der mit der Registrierungsvorrichtung (10) verbunden ist,
des Erzeugens von Informationen bezüglich des Status des Ortes basierend auf dem Vergleichsergebnis, und
des Übermittelns der Informationen betreffend den Status des Ortes zu der zumindest einen Registrierungsvorrichtung (10)
an der Verwaltungseinheit (13) ausgeführt werden.

13. Verfahren gemäß Anspruch 12, **dadurch gekennzeichnet, dass** die Informationen, die an der Verwaltungseinheit (10) gespeichert sind, nach Ort sortiert sind und dass die empfangenen Informationen vorzugsweise eine Angabe des Ortes, mit dem die Registrierungsvorrichtung (10) verbunden ist, umfasst.

14. Verfahren nach einem der Ansprüche 12 oder 13, **dadurch gekennzeichnet, dass** die Informationen, die an der Verwaltungseinheit (13) gespeichert sind, basierend auf dem Vergleichsergebnis aktualisiert werden.

15. Verfahren nach einem der Ansprüche 9 bis 14, **dadurch gekennzeichnet, dass** dieses mit einem System (1) gemäß Anspruch 8 ausgeführt wird.

## Revendications

1. Dispositif d'enregistrement destiné à gérer des informations sur le statut d'un emplacement, qui est lié au dispositif d'enregistrement, dans lequel le dispositif d'enregistrement (10) comprend :
au moins une unité de communication (100) destinée à communiquer avec au moins une entité externe (12, 13),
ladite unité de communication (100) comprenant un premier élément de communication (101) destiné à communiquer avec au moins une entité externe qui est un serveur distant (12) destiné à gérer une communication entre le dispositif d'enregistrement (10) et au moins un téléphone mobile (11),
ladite unité de communication (100) comprenant un troisième élément de communication (103) destiné à communiquer avec au moins une entité externe qui est un téléphone mobile (11) afin de recevoir au moins des données d'identification du ou des téléphones mobiles (11),
ladite unité de communication (100) comprenant un deuxième élément de communication (102) destiné à communiquer avec au moins une entité externe formée par une unité de gestion (13), qui est une unité de gestion (13) destinée à gérer le statut de l'emplacement, afin de transmettre au moins les données d'identification reçues du ou des téléphones mobiles (11) à au moins une unité de gestion et afin de recevoir des informations sur le statut de l'emplacement au niveau du dispositif d'enregistrement (10) à partir de l'unité de gestion (13),
ledit dispositif d'enregistrement (10) comprenant en outre au moins un élément d'activation (104) destiné à activer le premier élément de communication (101) de manière à établir une liaison de communication avec le ou les serveurs distants (12).

2. Dispositif d'enregistrement selon la revendication 1, **caractérisé en ce qu'**il comprend en outre une interface utilisateur (105) destinée à délivrer des informations sur le statut de l'emplacement à un utilisateur (2), dans lequel l'interface utilisateur (105) est, de préférence, une interface utilisateur graphique, qui peut, en variante, comprendre au moins une diode électroluminescente (LED).

3. Dispositif d'enregistrement selon l'une quelconque des revendications 1 ou 2, **caractérisé en ce que** l'élément d'activation (104) comprend au moins un détecteur (1040, 1041) pour détecter le mouvement et/ou l'accélération d'au moins une partie du dispositif d'enregistrement (100), dans lequel le détecteur est, de préférence, un accéléromètre (1040) ou une partie d'un commutateur (1041).

4. Dispositif d'enregistrement selon l'une quelconque des revendications 1 à 3, **caractérisé en ce qu'**il comprend au moins un module d'identification (109), qui est, de préférence, un module d'identification de souscripteur (SIM).

5. Dispositif d'enregistrement selon l'une quelconque des revendications 1 à 4, **caractérisé en ce qu'**il comprend au moins un élément de détection (107) afin de détecter la présence d'un être humain.

6. Dispositif d'enregistrement selon l'une quelconque des revendications 1 à 5, **caractérisé en ce qu'**il comprend une unité de gestion d'énergie (106), qui est, de préférence, raccordée à un élément de détection (107) afin de détecter la présence d'un être humain et/ou raccordée à une source d'alimentation.

7. Dispositif d'enregistrement selon l'une quelconque des revendications 1 à 6, **caractérisé en ce que** le dispositif d'enregistrement (10) comprend au moins deux parties de corps qui sont raccordées de manière à pouvoir se déplacer l'une par rapport à l'autre, dans lequel les parties de corps présentent, de préférence, une forme en dôme.

8. Dispositif de gestion du statut d'un emplacement comprenant au moins un dispositif d'enregistrement (10) selon l'une quelconque des revendications 1 à 7, au moins un téléphone mobile (11), au moins un serveur distant (12) pour gérer la communication entre au moins l'un des dispositifs d'enregistrement (10) et au moins l'un des téléphones mobiles (11) et au moins une unité de gestion (13) pour gérer le statut de l'emplacement.

9. Procédé de gestion du statut d'un emplacement dans un dispositif comprenant au moins un dispositif d'enregistrement (10), dans lequel au moins les étapes de :
détection d'un mouvement d'au moins une partie du dispositif d'enregistrement (10),
production d'un événement sur la base du mouvement,
transmission de l'événement à au moins un serveur distant (12) pour gérer la communication entre le dispositif d'enregistrement (10) et au moins un téléphone mobile (11),
réception d'un signal d'instruction en provenance du serveur distant (12) en réponse à l'événement,
établissement d'une liaison de communication avec au moins un téléphone mobile (11) sur la base du signal d'instruction,
réception de données d'identification en provenance du ou des téléphones mobiles (11) par l'intermédiaire de la liaison de communication établie, et
transmission des données d'identification reçues à au moins une unité de gestion (13) pour gérer le statut de l'emplacement, et
réception d'informations sur le statut de l'emplacement en provenance de l'unité de gestion,
sont réalisées au niveau du dispositif d'enregistrement (10).

10. Procédé selon la revendication 9, **caractérisé en ce que** le procédé comprend en outre l'étape de mémorisation et/ou de transmission de ces informations de statut d'emplacement au niveau du dispositif d'enregistrement (10),

11. Procédé selon l'une quelconque des revendications 9 ou 10, **caractérisé en ce qu'**il comprend en outre les étapes de :
détection de la présence d'un humain à l'emplacement et
modification de l'état du dispositif d'enregistrement (10) en un état prêt, si la présence d'un humain est détectée.

12. Procédé selon l'une quelconque des revendications 9 à 11, **caractérisé en ce que**, afin d'assurer la gestion du statut d'un emplacement sur un dispositif comprenant au moins un dispositif d'enregistrement (10) et au moins une unité de gestion (13), les étapes de :
réception d'informations, comportant des données d'identification d'un téléphone mobile (11) en provenance d'au moins un dispositif d'enregistrement (10),
comparaison des données d'identification reçues avec des informations mémorisées au niveau de l'unité de gestion (13) à propos de l'emplacement associé au dispositif d'enregistrement (10),
production d'informations à propos du statut de l'emplacement sur la base du résultat de comparaison, et
transmission d'informations à propos du statut de l'emplacement au ou aux dispositifs d'enregistrement (10),
sont réalisées au niveau de l'unité de gestion (13).

13. Procédé selon la revendication 12, **caractérisé en ce que** les informations mémorisées au niveau de l'unité de gestion (13) sont mémorisées, triées par emplacement et **en ce que** les informations reçues comprennent, de préférence, un indice sur l'emplacement auquel le dispositif d'enregistrement (10) est associé.

14. Procédé selon l'une quelconque des revendications 12 ou 13, **caractérisé en ce que** les informations mémorisées au niveau de l'unité de gestion (13) sont mise à jour sur la base du résultat de comparaison.

15. Procédé selon l'une quelconque des revendications 9 à 14, **caractérisé en ce qu'**il est mis en oeuvre avec un dispositif (1) selon la revendication 8.
